# EUROPEAN PATENT APPLICATION

(11) **EP 0 556 530 A1**
(43) Date of publication of application: **25.08.1993**
(21) Application number: 92600010.0
(22) Date of filing: 23.12.1992
(51) Int. Cl.: G09B 11/04

(54) **Technique of manufacturing sheets upon which letters, words, numbers or drawings are printed and deeply indented and a handwriting and drawing learning method**

(30) Priority: 23.12.1991 GR 91010509
(71) Applicant: Moroudas, Petros, GR-104 37 Athens (GR)
(72) Inventor: Moroudas, Petros, GR-104 37 Athens (GR)
(74) Representative: Papaconstantinou, Helen G.

(57) **Abstract**

Technique of manufacturing sheets in exercise book format upon which letters, numbers and drawings and handwriting and drawing learning methods are a) printed and b) deeply indented, whereby one sheet (1) of paper or cardboard disolays letters, numbers or drawings (4) in printed colour on the left side and is deeply indented on the right side, and the pupil writes directly in pencil upon the non-coloured indentations (2) the letters, numbers or drawings (4) indented on the sheet and learns handwriting and drawing on his own without tiring parent or teacher.

## Description

The invention consists of the manufacturing of sheets in exercise book format which are made from paper or cardboard. On the left hand side of each page of our method's exercise book large letters, words, numbers and drawings are-printed in colour. In particular,where the learning of the alphabet is concerned, on the left hand sheet the same letters of the alphabet are printed in colour, which are also deeply indented on the right hand sheet of the exercise book upon which the pupil is intended to practice. Adjacent to each printed letter there is a printed multicoloured shape which depicts an object (animal, plant, landscape, instrument, etc.) whose name begins with the corresponding letter of the alphabet so that the pupil may completely comprehend each letter by means of the varying references to the variety of life and human society.

On each right hand sheet of the exercise book,the same letters and words, numbers and drawings are deeply indented as those printed on the left hand sheet, and the pupil practices, by writing in any type of pencil directly onto the non-coloured lines of the numbers or drawings indented on this page and fills them in with complete success.

The above learning method, by which pupils are trained in handwriting, drawing and spelling is completely original in its entirety, not having a predecessor in industrial production of this technique.

Its advantages against any other method are astonishing since:
1) It removes the restraining influence, fear and doubt, which parent and teacher supervision for possible faulty execution of any exercise brings about, since the method ensures the correct execution of learning exercises in all cases.
2) It provides for the possibility of independent effort and learning on the part of the pupil, without help from parents or teachers, simultaneously inspiring self-confidence in himself and developing his tactile and visual memory.
3) The pupil is trained in the spelling of words by means of the constant repetition of exercises on the exercise book pages (sheets).
4) Of all the methods available, only ours offers the vital educational feature of "artistic supervision" since it is offered not in the form of metal copy sheets upon which transparent paper is placed but it is offered in the exercise book format artistically illustrated whereby at the beginning of each line of heavily typed letters or numbers on each right hand sheet there is a coloured printed example of the same letter or number so that the pupil may fully understand the picture of the heavily typed character, which he attempts to draw.

In continuation, the letter or the number which he completed with his pencil in the non-coloured indentations may be compared with the coloured example at the beginning of each line and he is able to enjoy the satisfaction of seeing the complete agreement with the original example.

This invention will be understood by specialists in the present technique by reference to the accompanying drawings describing the technique hereby presented, in which the preferred industrial application of the invention is indicatively illustrated.

This appears in drawing I where the upper side of the surface invented of the left sided page of our exercise book format method with various indicative letters and drawings is shown.

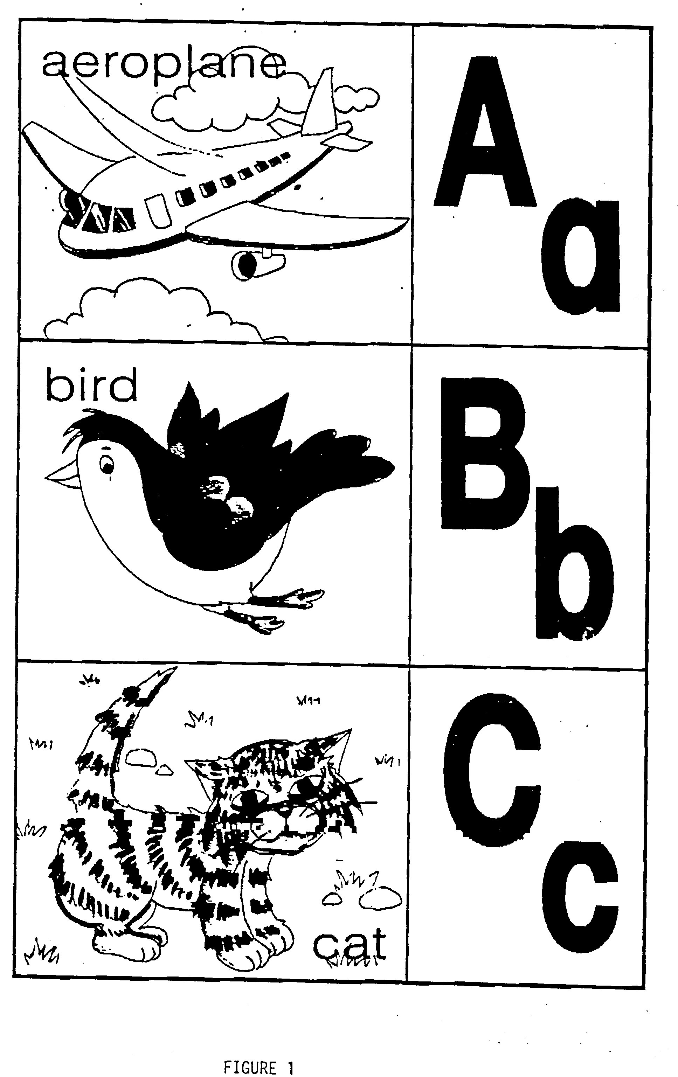

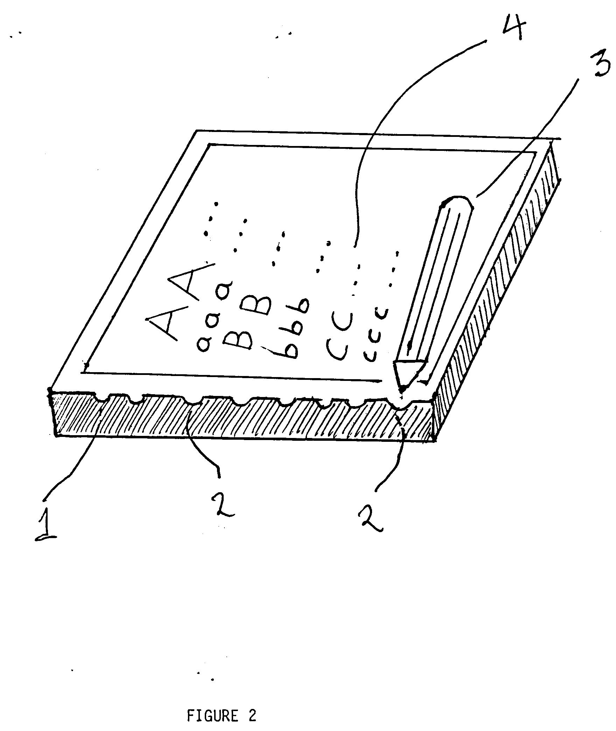

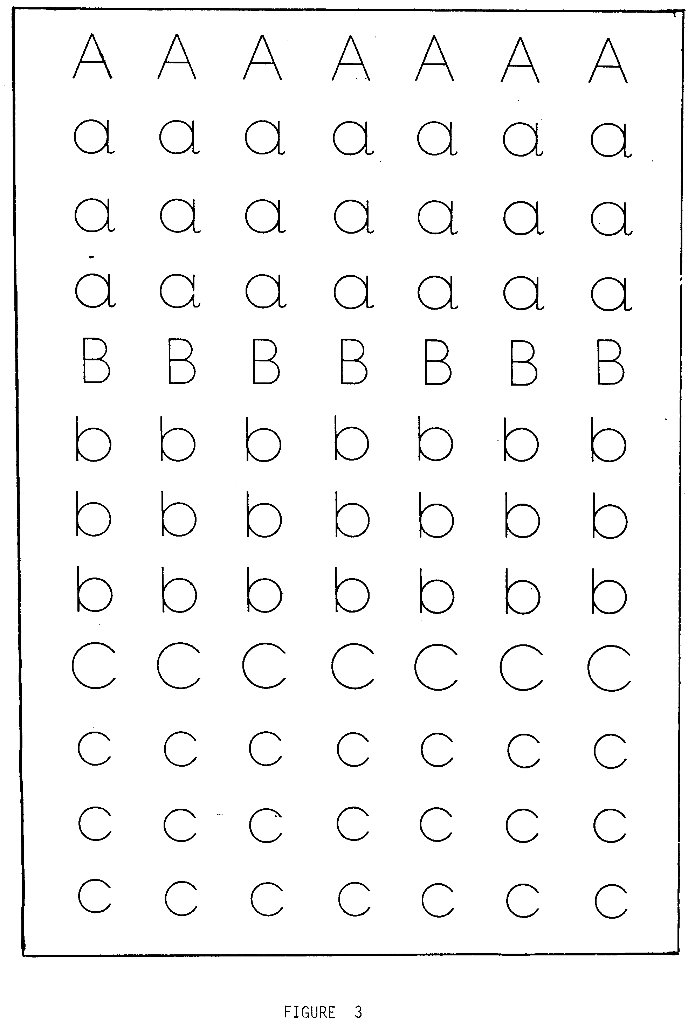

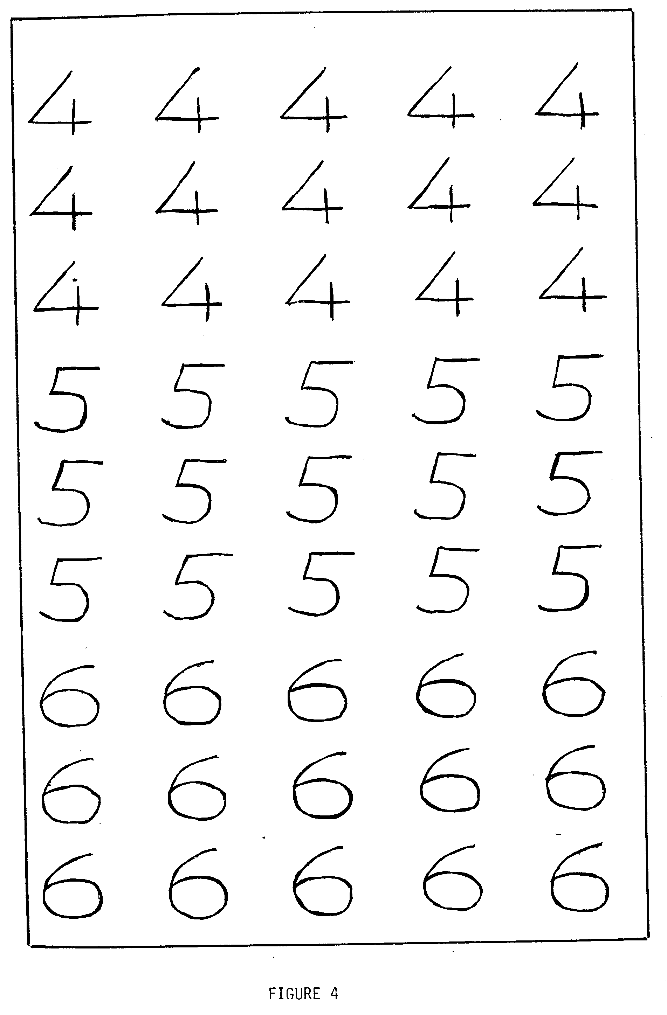

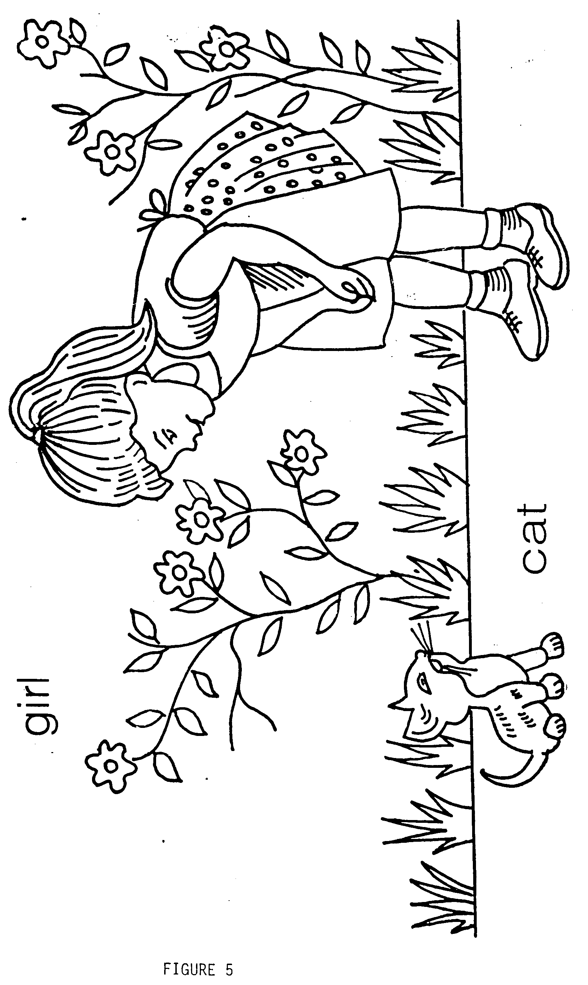

In drawing 2 the section on the side of the sheet invented of a right hand page of our method's exercise book is shown. In drawings 3-5 the upper sides of varying right hand pages of the invention depicting various letters, numbers and drawings indicated, are shown.

In referring indicatibly to the example of application of our method we hereby number the main parts of the object, referring to the corresponding drawings/plans for said parts, where they are illustrated not to scale, but simply in hypothetical proportions of size of the parts in relation to themselves.

In accordance with the preferred indicative application of the invention, a sheet (1) manufactured of a sheet of paper or cardboard, displays deeply indented letters, words, numbers, arithmetic sums, drawings or a combination of these.

In order to stamp out the various figures or drawings on the sheet they are initially drawn (4) then they are imprinted on the wrong side of a metal matrix and then the indentation of the various figures or drawings (4) on the surface of the sheet of paper or cardboard is effected by pressure of the corresponding metal matrices at printing press level, on the one surface (1) of the sheet of paper or cardboard, and the pupil practices on this writing in pencil (3) straight on to the non-coloured indentations (2) of the figures or drawings (4) which have been stamped on the surface (1) of the right hand page of the sheet of paper or cardboard in our methods exercise book.
5) It should be noted that, as mentioned in the description, the indented figures and drawings as mentioned above sheet (1) are printed in colour on the left hand side sheet of the exercise book.

## Claims

**1)** Technique of manufacturing sheets in exercise book format upon which letters, numbers and drawings, handwriting and drawing learning methods are (1) printed and (2) deeply indented, the technique of which is characterised by the fact that every left handed sheet (I) of paper or cardboard has large coloured printed letters, words, numbers and drawings. Each right hand surface (I) of the sheet of paper or cardboard has upon it stamped out cylindrical indentations (2) which form letters, words, numbers or drawings (4) and are useful for the pupil to practice in learning handwriting, drawing or spelling.
The pupil practices not by copying the drawings onto transparent paper placed on the sheet but by writing in pencil (3) directly within the indentations (2) the letters, words, numbers or drawings printed on this sheet.

**2)** A learning method of handwriting, drawing and spelling by pupils, which is distinguished by the use of sheets (1) referred to in evaluation 1, whereby the pupil writes in pencil (3) directly within the non-coloured indentations (2) of the right sided sheet of the exercise book.

**3)** The use of sheets, as referred to in the evaluations 1 and 2 for learning handwriting, drawing and spelling by students of all ages and intellectual abilities.
